# EUROPEAN PATENT SPECIFICATION

(11) **EP 0 623 223 B1**
(45) Date of publication and mention of the grant of the patent: **02.04.1997**
(21) Application number: 93904551.4
(22) Date of filing: 21.01.1993
(51) Int. Cl.: G01V 1/40, G01V 1/16

(54) **METHOD AND APPARATUS FOR ACOUSTIC SHEAR WAVE LOGGING**
VERFAHREN UND GERÄT ZUM MESSEN MIT AKUSTISCHEN SCHERWELLEN
PROCEDE ET APPAREIL DE DIAGRAPHIE ACOUSTIQUE DES ONDES DE CISAILLEMENT

(30) Priority: 23.01.1992 US 824921; 23.01.1992 US 824922; 23.01.1992 US 824929
(43) Date of publication of application: 09.11.1994
(73) Proprietor: MOBIL OIL CORPORATION, Fairfax, Virginia 22037-0001 (US)
(72) Inventor: DENNIS, Charles, Louis, Richardson, TX 75080 (US); LENHARDT, Will, Karl, Richardston, TX 75080 (US); SCHMITT, Denis, Philippe, Richardston, TX 75080 (US)
(74) Representative: Colmer, Stephen Gary
(86) International application number: US9300521
(87) International publication number: WO9315421

(56) References cited:
- US-A- 4 800 981
- US-A- 4 984 652
- US-A- 5 001 676
- J. ACOUST. SOC. AM., June 1990, pp. 2405-2421; H.D. LESLIE et al.: 'Eccentric dipole sources in fluid-filled boreholes : Numerical and experimental results'

## Description

This invention relates to a method and apparatus for acoustic shear wave logging.

It has long been known to acoustically log open wellbores to determine the velocities of compression ("P") waves and shear ("S") waves traveling through rock formations located in the wellbore region. Logging devices have been used for this purpose which normally comprise a sound source (i.e., transmitter) and one or more receivers disposed at pre-selected distances from the sound sources. The use of remotely spaced, multiple receivers is intended to aid in distinguishing between various arriving wave fronts since travel time differentials increase with increasing distance from the transmitter, as described in US-A-4383308.

Such arriving wave fronts generally include both headwaves and guided waves. A first arriving event is the headwave commonly called a compressional wave which represents acoustic energy which has been refracted through the formation adjacent the wellbore. This compressional wave travels as a fluid pressure wave in the wellbore mud from the transmitter to the formation where it travels at the compressional wave velocity of the particular formation. The compressional wave then travels to the receiver through the wellbore mud as a fluid pressure wave.

A second arriving event is the headwave commonly called a shear wave which is also refracted through the formation adjacent the wellbore. Unlike the compressional wave, the shear wave travels at shear velocity through the formations. The particles of the formation along the path of propagation are vibrated in a direction perpendicular to the direction of the propagation of the wave.

A third arriving event is the guided wave commonly called a tube wave or Stoneley wave which causes a radial bulging and contraction of the borehole and its travel is, therefore, associated with the borehole wall, that is, the boundary between the borehole fluids and the formation solids.

A fourth arriving event is the guided wave commonly called a normal mode, pseudo-Rayleigh wave, or reflected conical wave. The travel of this normal mode is restricted to the borehole and has an oscillatory pattern normal to its direction of travel. Normally, the shear wave is indistinguishable from the onset of this normal mode due to concurrent arrival times.

Various signal timing and wave front analysis methods have also been suggested for distinguishing between these various wave fronts received at a given receiver. Most of these methods involve timing circuits which anticipate the receipt of, and facilitate the collection of, such wave front information. For descriptions of various logging techniques for collecting and analyzing acoustic wave data, please refer to US-A-3333238; US-A-3362011; US Reissue No. 24,446; and US-A-4383308.

In the design of such acoustic logging tools, various types of transmitters, such as piezoelectric or magneto-strictive transmitters, have been suggested for creating the acoustic logging signals. For conventional logging operations, most such transmitters have been centrally located in the borehole, and have been adapted to generate sound which is radiated in a multidirectional (360°) pattern from the transmitter to adjacent wellbore surfaces. Such transmitters are well suited for creating compression waves in surrounding rock and sand formations.

Recently, attention has been directed to developing transmitters which are particularly suited to shear wave logging. Such transmitters generally attempt to achieve a single point force application of sound energy to the borehole wall. The theory behind point force transmitters is that they are capable of directly generating shear waves. Conventional multidirectional transmitters are said to be capable only of indirectly creating shear waves. Point force type transmitters produce shear waves of substantially higher amplitudes than heretofore possible with conventional multidirectional compression wave transmitters. Accordingly, formations such as loosely consolidated or unconsolidated sand, for which shear waves cannot be refracted back into the hole to permit definitive detection using conventional compression wave receivers, may now be shear wave logged with these shear wave logging systems. US-A-4649525 describes a shear wave acoustic logging system employing such a point force transmitter for the shear wave generation.

According to one aspect of the present invention there is provided a method for acoustic shear wave logging of a subsurface formation penetrated by a deviated borehole, comprising the steps of:
a) traversing the borehole with logging tool containing a dipole acoustic energy source and at least one axially spaced-apart dipole acoustic energy receiver, said dipole source and dipole receiver being positioned eccentrically with respect to the axis of said borehole,
b) rotating said dipole source about the axis of the borehole tool to focus the directivity of acoustic energy such that it is perpendicular to the axis of the borehole tool and is within substantially 20° of the perpendicular to the direction of eccentricity of said source with respect to the borehole axis,
c) exciting said dipole source to generate asymmetric acoustic energy pressure waves within the borehole fluid which are converted upon impact with the cased borehole into (i) shear waves which travel through the surrounding unconsolidated formations, and (ii) tube waves which travel through the casing to said spaced-apart receivers,
d) rotating said dipole receiver to focus the reception of acoustic energy in the same direction as the focusing of said source, and
e) recording the amplitudes of said shear waves and said tube waves within said acoustic energy received by said dipole receiver such that the amplitudes of said tube waves are minimized with respect to the amplitudes of said shear waves.

Advantageously the degree of eccentricity of said source and said receiver is such as to position said logging tool in juxtaposition with the cased borehole wall.

Preferably the positioning of said logging tool in juxtaposition with the cased borehole wall is affected by the force of gravity acting along the length of said deviated borehole.

Desirably eccentricity of said source and said receiver with respect to the borehole axis is within a horizontal borehole.

According to another aspect of the invention there is provided a borehole logging tool for acoustic shear wave logging of a subsurface formation penetrated by a deviated borehole, comprising:
a) a dipole acoustic energy source mounted for rotation about the axis of the borehole tool to focus the directivity of acoustic energy such that it is perpendicular to the axis of the borehole tool,
b) at least one axially spaced-apart dipole acoustic energy receiver mounted for rotation about the axis of the borehole tool to focus the reception of acoustic energy in the same direction as the focusing of said source,
c) a motor mechanically coupled to said source and said receiver for rotating said source and said receiver about the axis of the borehole tool,
d) control means for rotating said source and said receiver to maintain the focus of said source and said receiver in a horizontal direction that is perpendicular to the direction of eccentricity of the borehole tool with respect to the borehole.
There are two preferred embodiments for the control means. In the first preferred embodiment the control means comprises: means for providing a first signal representing the source and receiver rotational positions relative to a vertical direction; means for providing a second signal having a fixed reference level representing said vertical direction; a comparator for providing a third signal of the difference between said first and second signals representing the difference between said first and second signals; and means for applying said third signal to said motor to cause it to rotate said source and said receiver to a position that minimizes said third signal so as to maintain the focus of said source and said receiver in a horizontal direction that is perpendicular to the direction of eccentricity of the borehole tool with respect to the borehole.

In the first embodiment the system involved may be either analogue of digital. In the analogue system of the first embodiment the means for providing said first signal preferably comprises a first potentiometer having a stator and a rotor, said stator being coupled to a gimbal mounted weight so that it moves in response to the vertical pull of gravity on said weight, and said rotor being rotationally coupled with said source and receiver, whereby said potentiometer provides a voltage output representing the rotational position of said source and said receiver relative to a vertical direction. And the means for providing said second signal preferably comprises a second potentiometer coupled to a fixed voltage source.

The comparator is desirably an operational amplifier that subtracts said first signal represented by voltage output of said first potentiometer from said second signal represented by a fixed voltage output of said second potentiometer to provide said third signal. said means for applying said third signal to said motor comprises a current amplifying means for rotating said motor in a direction to minimize the difference between said first and second signals.

In the digital system of the first embodiment the means for providing said first signal preferably comprises a digital shaft encoder fixed to a gimbal mounted weight so that it moves in response to the vertical pull of gravity on said weight and rotatably coupled to said source and said receiver, the rotational position of said digital shaft encoder providing an output representing the rotational position of said source and said receiver relative to a vertical direction. And the means for providing said second signal provides a fixed digital reference number.

The comparator is desirably a microcontroller programmed to subtract said first signal represented by the output of said digital shaft encoder from said second signal represented by said fixed digital reference number to provide said third signal.

The means for applying said third signal to said motor comprises: a digital-to-analog convertor; and a current amplifying means for rotating said motor in a direction to minimize the difference between said first and second signals.

In the second embodiment the preferred control means comprises: means for providing a first signal representing the source and receiver rotational positions relative to the rotational position of the borehole tool within the deviated borehole; means for providing a second signal representing the rotational position of the borehole tool within the deviated borehole relative to a vertical direction; a comparator for providing a third signal of the difference between said first and second signals representing the rotational position of said source and said receiver relative to a vertical direction; and means for applying said third signal to said motor to cause it to rotate said source and said receiver to a position that minimizes said third signal so as to maintain the focus of said source and said receiver in a horizontal direction that is perpendicular to the direction of eccentricity of the borehole tool with respect to the borehole axis.

In the second embodiment the system involved may be either analogue or digital. In the analogue system the means for producing said first signal comprises a first potentiometer having a stator and a rotor, said stator being affixed to the housing of the borehole tool, and said rotor being rotationally coupled with said source and said receiver, the rotational position of said rotor providing for a voltage output from said first potentiometer representing the relative rotational position of said source and said receiver to said borehole tool. And the means for producing said second signal preferably comprises: (i) a second potentiometer having a stator, and a movable rotor, said stator being affixed to the housing of the borehole tool, and (ii) a gimbal mounted weight mechanically coupled to said second potentiometer to move said rotor in response to the vertical pull of gravity on said weight, the rotational position of said rotor providing for a voltage output from said potentiometer representing the rotational position of said borehole tool relative to a vertical direction.

The comparator is desirably an operational amplifier that subtracts said first signal represented by voltage output of said first potentiometer from said second signal represented by the voltage output of said second potentiometer to provide said third signal representing the rotational position of said source and said receiver relative to a vertical direction.

The means for applying said third signal to said motor preferably comprises a current amplifying means for rotating said motor in a direction to minimize the difference between said first and second signals.

In the digital system of the second embodiment the means for providing said first signal preferably comprises a first digital shaft encoder fixed to the housing of said borehole tool and to said source and receiver, the rotational position of said digital shaft encoder providing an output representing the rotational position of said source and said receiver relative to said borehole tool. And the means for producing said second signal preferably comprises: (i) a second digital shaft encoder fixed to the housing of said borehole tool; and (ii) a gimbal mounted weight mechanically coupled to said second digital shaft encoder to cause said second digital shaft encoder to provide an output representing the rotational position of said borehole tool relative to a vertical direction.

The comparator is desirably a microcontroller programmed to subtract said first signal represented by the output of said first digital shaft encoder from said second signal represented by the output of said second digital shaft encoder to produce said third signal representing the rotational position of said source and receiver relative to a vertical direction.

The means for applying said third signal to said motor preferably comprises: a digital-to-analog convertor; and a current amplifying means for rotating said motor in a direction to minimize the difference between said first and second signals.

Reference is now made to the accompanying drawings, in which:
FIG.1 illustrates a borehole logging tool eccentrically positioned within a cased unconsolidated formation for conducting a shear wave acoustic logging of such formation in accordance with the present invention;
FIG.2 is a top view of the borehole logging tool and cased unconsolidated formation of FIG.1 showing the directions for the asymmetrical acoustic energy action of the dipole source and for the sensitivities of the dipole receiver of FIG.1;
FIG.3 illustrates receiver signal amplitudes with the dipole source action and the receiver sensitivities of FIG.1 acting in the same direction at various angles to the direction of tool eccentricity within the borehole as illustrated in FIG.2;
FIGS. 4 to 6 illustrate one embodiment of electrical schematics of the borehole logging tool shown in FIG 1;
FIGS. 7 to 9 illustrate another embodiment of electrical schematics of the borehole logging tool shown in FIG 1;

In unconsolidated subsurface formations, borehole logging tools have used a dipole acoustic energy source and a plurality of spaced-apart dipole acoustic energy receivers to generate and record the flexural mode associated with a pure bending of the borehole whose low frequency part propagates at the shear velocity of the unconsolidated formation. In such an unconsolidated formation, shear velocity is less than the acoustic velocity of the borehole fluid and the logging tool provides a direct measure of the shear velocity in contrast to the borehole logging tools employing monopole acoustic energy source and receivers.

However, a great portion of the boreholes are cased with steel lining and cement. In such a cased borehole the flexural mode, i.e., shear wave, generated by a dipole acoustic energy source in an unconsolidated formation is often obscured by a high amplitude tube wave traveling at a velocity close to the acoustic velocity of the borehole fluid.

An off-centre, or eccentrically positioned dipole acoustic energy source generates several modes, among which is the tube wave. In an open hole, i.e., uncased, the tube wave is strongly coupled to an unconsolidated formation and propagates at a velocity close to that of the shear wave velocity of the unconsolidated formation. This results in interferences which do not critically interfere with the determination of the shear wave velocity (see "Eccentric dipole sources in fluid-filled boreholes: Numerical and experimental results", by Leslie and Randall, J. Acoust. Soc. Am., June 1990, pgs. 2405-2421).

Mainly the amplitude is altered as it may not decrease monotically with increasing source-to-receiver distance. However, in cased boreholes, the tube wave propagates at a velocity close to the acoustic velocity of the borehole fluid. Therefore, for a cased unconsolidated formation, the tube wave will always arrive before the shear wave, thereby interfering with its determination.

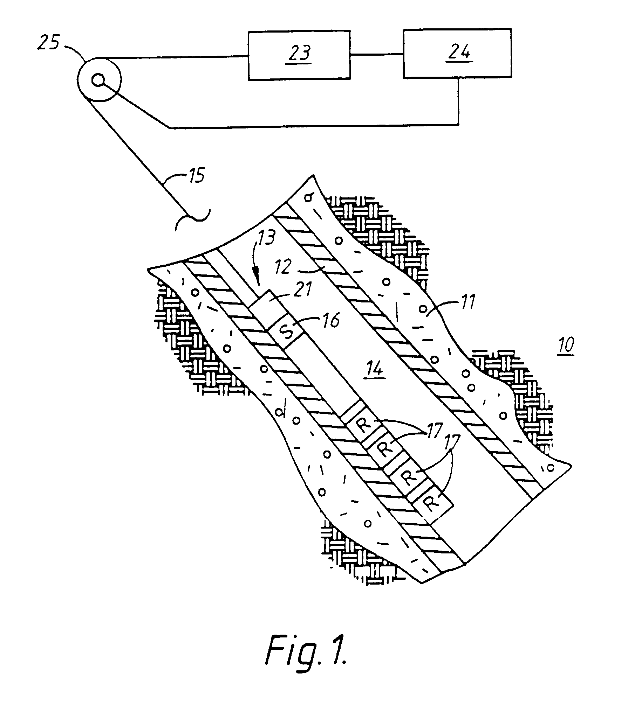

Referring now to FIG.1, there is illustrated a borehole logging tool useful in carrying out the method of the present invention. An unconsolidated formation 10 is penetrated by a borehole 14 which is deviated from the vertical and is lined with steel well-casing 12 and cement 11. A borehole logging tool 13 is suspended within the deviated borehole 14 by cable 15.

The force of gravity causes the borehole tool 13 to rest against, or in juxtaposition with, the well casing 12 in the case of a deviated or horizontal borehole. A dipole acoustic energy source 16 generates asymmetrical acoustic energy which travels by way of the fluid within the borehole and the surrounding cased formation as compressional, tube and shear waves to a plurality of spaced-apart dipole acoustic energy receivers 17.

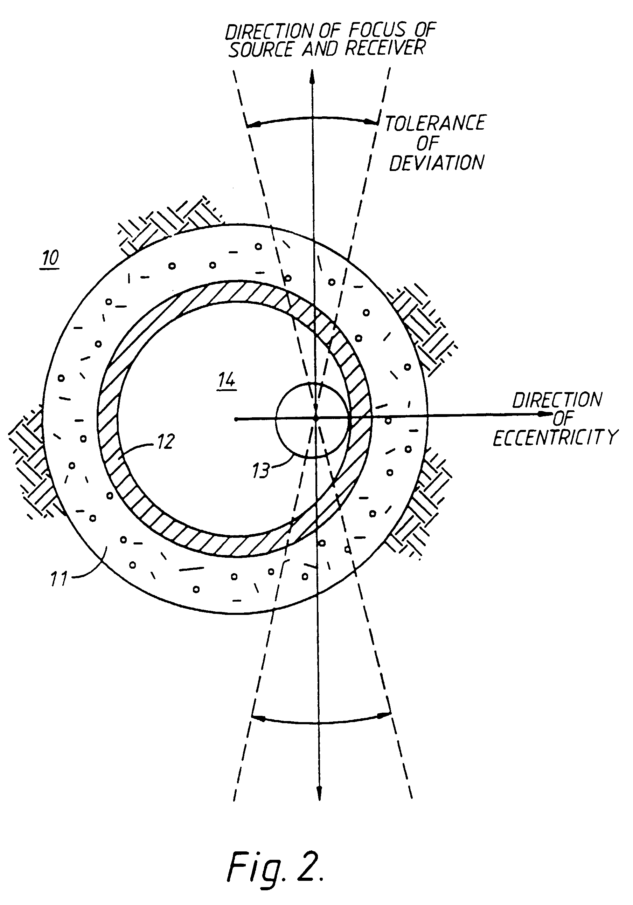

To carry out the method of the present invention with the borehole logging tool of FIG.1, the off-centred borehole tool 13 is oriented, as shown in FIG.2, so that the directions of focus for the asymmetrical acoustic energy action of the dipole source 16 and for the sensitivities of the dipole receivers 17 are perpendicular to the axis of the borehole tool as well as perpendicular to the direction of tool eccentricity. Such configuration allows the method of the present invention to minimize the effect of interfering tube waves on the recorded shear waves since both the source and receivers point in the same direction (i.e. parallel directions) and such direction is perpendicular to the direction of eccentricity of the logging tool within the borehole.

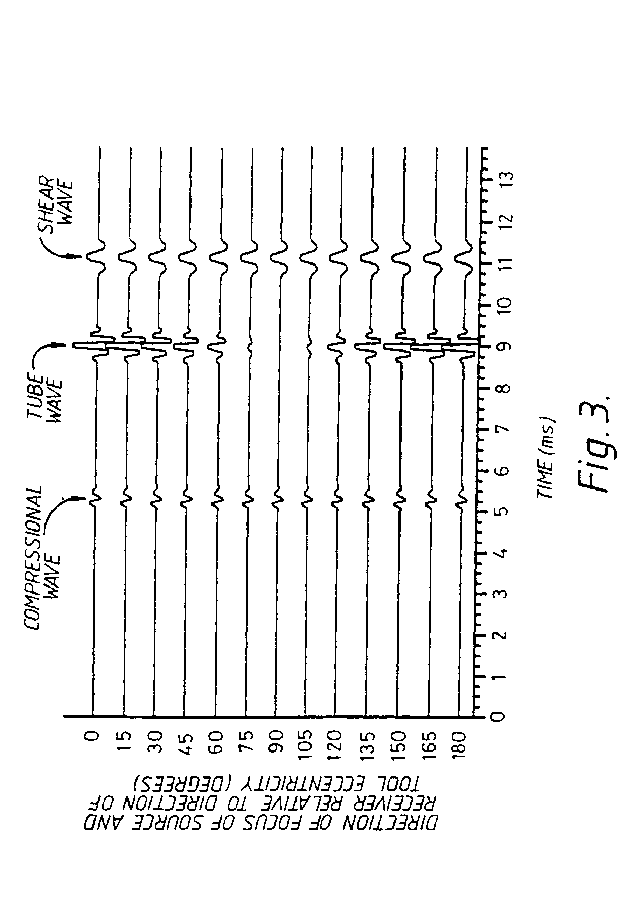

Such minimizing effect can be seen in FIG.3 wherein the amplitude of the recorded tube wave is minimized with both source action and receiver sensitivity directed perpendicular to the direction of tool eccentricity which has been set equal to zero. It can be further seen that the tube wave amplitude decrease phenomenon is efficient within a deviation of about ± 20° around the direction perpendicular to that of the eccentricity (e.g. 90°). It is noted that the directions of source action and receiver sensitivity with respect to the direction of eccentricity (i.e. 0°) are illustrated along the ordinate of FIG.3. In contrast, tube wave amplitude is maximized when both the source action and receiver sensitivities are directed parallel to the direction of tool eccentricity (e.g. 0° or 180°).

FIG.3 is illustrative of recorded acoustic waves within a borehole of 6.35 cm. inner radius and a 1.3 cm. offset of the source and receiver. The source and receiver spacing is 12 meters and the source has a centre frequency of 3 kHz. The steel casing is 0.80 cm. thick and the cement sheath is 3.645 cm. thick.

In a further aspect, the amplitude of the tube wave increases compared to that of the compressional and shear waves, whatever the orientation of the source and receivers, within increasing values of logging tool eccentricity within the borehole. The same phenomenon is observed with increasing borehole radius. Also, with a shorter source-to-receiver spacing or a more ringing source wave form of longer duration in time, the effects of the tube wave will be enhanced so that the shear wave signal can be totally obscured. It is important to note that a high amplitude tube wave leads to an increase of the dynamic range of the whole signal so that the shear wave signal may not be detectable in the presence of noise.

Similar results have been obtained when changing the casing, the cement, and the formation characteristics. When the formation is fast (i.e., its shear wave velocity is greater than the acoustic velocity of the borehole fluid) the tube wave arrives later than the shear wave and does not obscure it.

Referring again to FIG.1, there is shown a rotating motor assembly 21 for rotating the source 16 and the receivers 17 so that they will act along a direction perpendicular to the direction of eccentricity. Signals from the borehole tool 13 are transmitted uphole by conductors within cable 15 to any suitable utilization system at the surface of the earth. For example, the utilization system is illustrated as comprising an uphole analysis and control circuit 23 and a recorder 24 in order that the output from circuit 23 may be correlated with depth as indicated from a depth measuring sheath 25.

The dipole acoustic energy source 16 and the dipole acoustic energy receivers 17 may preferably take the form of the bender-type described in the aforementioned US-A-4649525. The bender disc is highly directional with peak sensitivity in the direction perpendicular to the disc face. In the method of the present invention, such discs will be mounted with their faces in the same direction parallel to the axis of the tool and will be rotated by the downhole gyroscope and motor so as to be perpendicular to the direction of tool eccentricity within the borehole as detected by the downhole sensor. greater than the acoustic velocity of the borehole fluid) the tube wave arrives later than the shear wave and does not obscure it.

Referring again to FIG.1, there is shown a rotating motor assembly 21 for rotating the source 16 and the receivers 17 so that they will act along a direction perpendicular to the direction of eccentricity. Signals from the borehole tool 13 are transmitted uphole by conductors within cable 15 to any suitable utilization system at the surface of the earth. For example, the utilization system is illustrated as comprising an uphole analysis and control circuit 23 and a recorder 24 in order that the output from circuit 23 may be correlated with depth as indicated from a depth measuring sheath 25.

The dipole acoustic energy source 16 and the dipole acoustic energy receivers 17 may preferably take the form of the bender-type described in the aforementioned US-A-4649525. The bender disc is highly directional with peak sensitivity in the direction perpendicular to the disc face. In the present invention, such discs will be mounted with their faces in the same direction parallel to the axis of the tool and will be rotated by the downhole gyroscope and motor so as to be perpendicular to the direction of tool eccentricity within the borehole as detected by the downhole sensor.

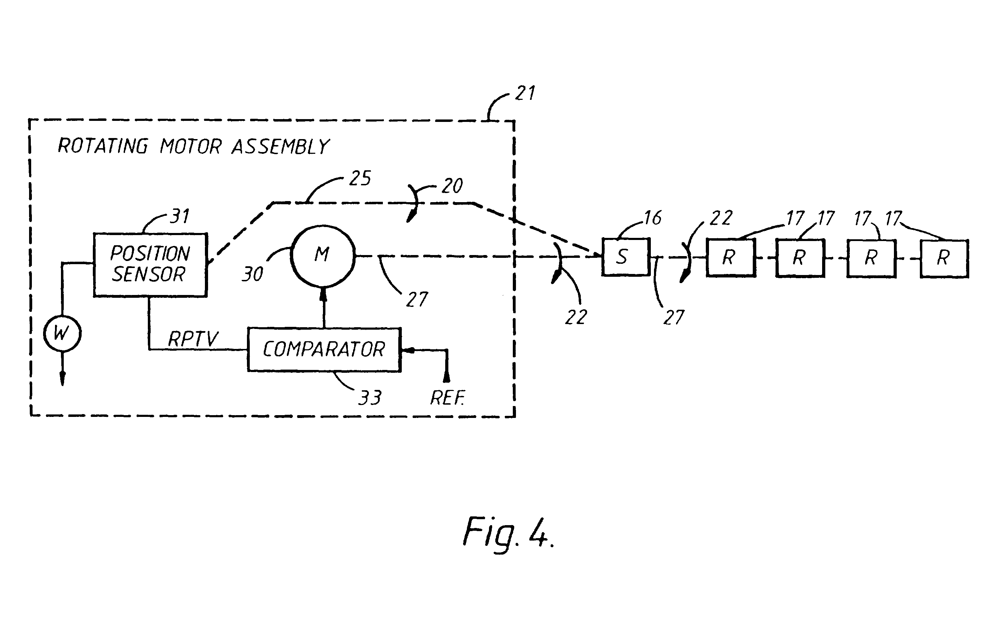

One embodiment of the rotating motor assembly 21 will now be described in detail in conjunction with FIGS. 4-6.

Referring to FIG.4, a motor 30 is rotatably coupled, as shown by dashed lines 27 and arrows 22, to acoustic energy source 16 and to acoustic energy receivers 17. Sensor 31 rotates along with source 16 and receivers 17, as shown by dashed line 25 and arrow 20, and outputs a source and receiver rotational position-to-vertical signal RPTV. Comparator 33 determines the difference between signal RPTV and a fixed reference signal REF and rotates motor 30 so as to minimize such difference and thereby maintain the focus of the source and receivers in a horizontal direction which, in the case of a deviated borehole with the logging tool lying in juxtaposition with the lower side of the borehole from the force of gravity, is in a direction perpendicular to the axis of the borehole tool and to the direction of eccentricity of the logging tool within the borehole.

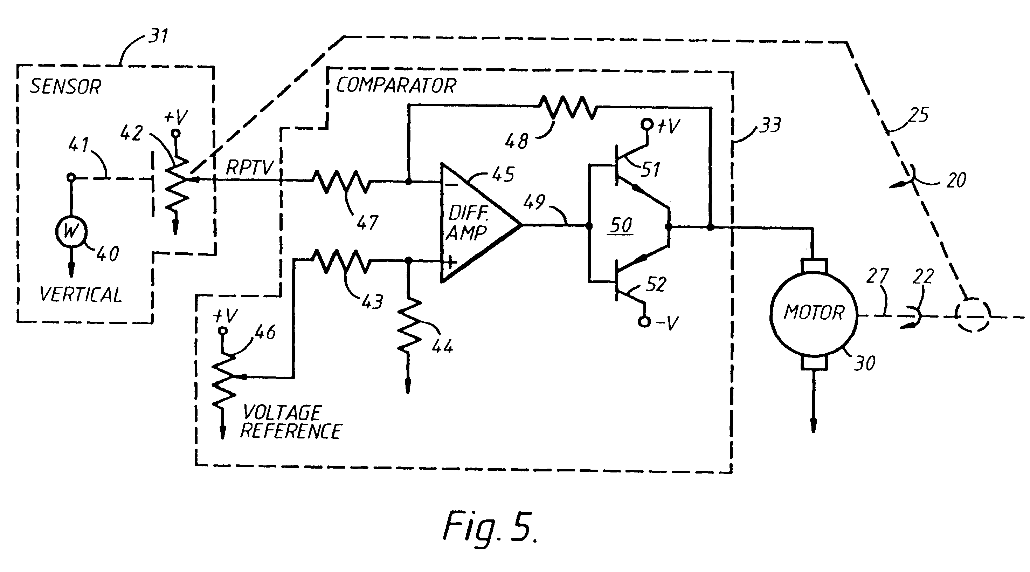

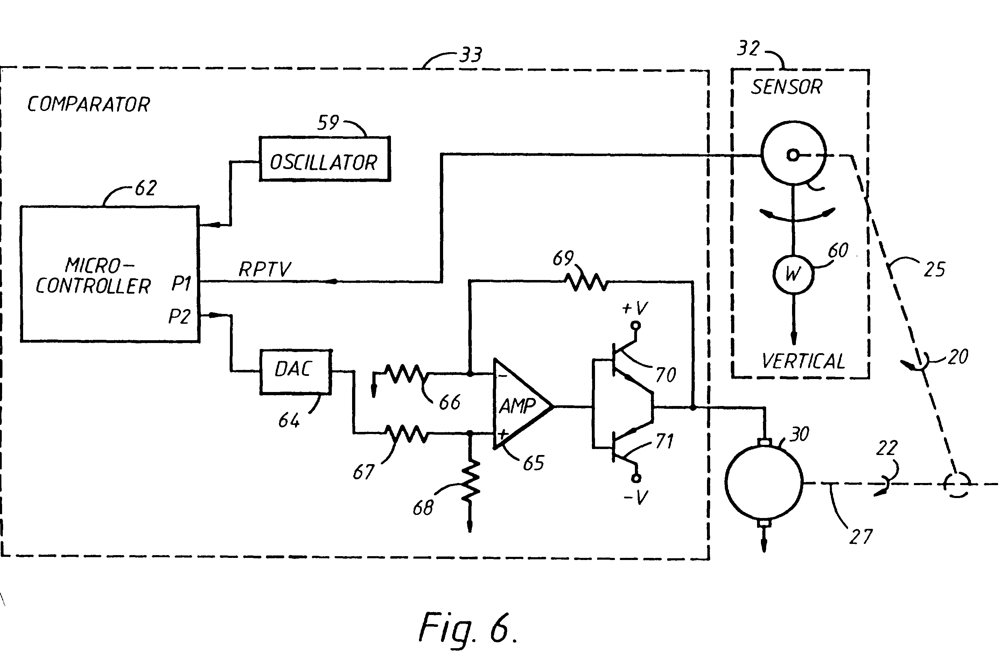

The rotating motor assembly 21 of FIG.4 may operate in accordance with the present invention in either an analog mode as shown in FIG.5 or in a digital mode as shown in FIG.6.

Referring firstly to FIG.5, there is illustrated an analog servomechanism mode of operation. Sensor 31 comprises a gimbaled mounted weight 40 which mechanically positions, by way of coupling 41 the stator of a potentiometer 42 to provide a vertical reference. The rotor of potentiometer 42 is positioned as shown by dashed line 25 and arrow 20, by the rotational positioning of the source 16 and receivers 17. This serves to provide a signal RPTV which is a receiver rotational position-to-vertical reference. A voltage proportional to this rotational position of the rotor of potentiometer 42 is input to comparator 33 through the resistor networks 47 and 48 to the inverting input of difference amplifier 45. A reference voltage REF is provided by potentiometer 46 and is input to comparator 33 through the resistor network 43 and 44 to the non-inverting input of difference amplifier 45. Amplifier 45 determines the difference of the two potentiometer outputs to produce an analog signal on line 49 which represents the difference of the receiver rotational position-to-vertical signal RPTV and the voltage reference signal REF. This analog difference signal is applied to amplifier 50 which drives motor 30 through current amplifying transistors 51 and 52 in a direction to minimize the difference between the signals RPTV and REF. Any difference detected by amplifier 45 is amplified to improve the response speed of the operation.

Referring now to FIG.6, there is illustrated a digital servomechanism mode of operation. Sensor 32 comprises a digital shaft encoder 61 whose rotor is mechanically coupled to, and rotates with, the motor 30, the source 16, and receiver 17 (as shown by dashed line 25 and arrow 20). The stator of digital shaft encoder 61 is mechanically moved by the gimbal mounted weight 60 to insure proper positioning regardless of logging tool inclination. The resulting output of encoder 61 is a receiver rotational position-to-vertical reference signal RPTV which is an absolute 8-bit binary word indicating the degree of inclination of the source and receivers relative to the vertical. This signal RPTV is input to the P1 port of an 8-bit microcontroller 62 as the transducer rotational error and is subtracted from a reference number set to full scale (i.e., 11111111B). The resulting output at port P2 is input to an 8-bit digital-to-analog convertor 64 which converts the microcontroller 62 output to an analog voltage that is amplified by operational amplifier 65 and associated resistors 66-69 and transistors 70-71. This amplified analog signal is applied to motor 30 for rotational positioning the source 16 and receivers 17 so as to return any rotational error to zero. Initially the system is set up such that the encoder 61 is at half full scale with the source and receivers set at the desired rotational position for horizontal motion.

Microcontroller 62 determines the difference between the rotational error signal RPTV and the reference number in accordance with the following assembly code designed for an Intel 8751/87C51 microcontroller with on-board eprom:

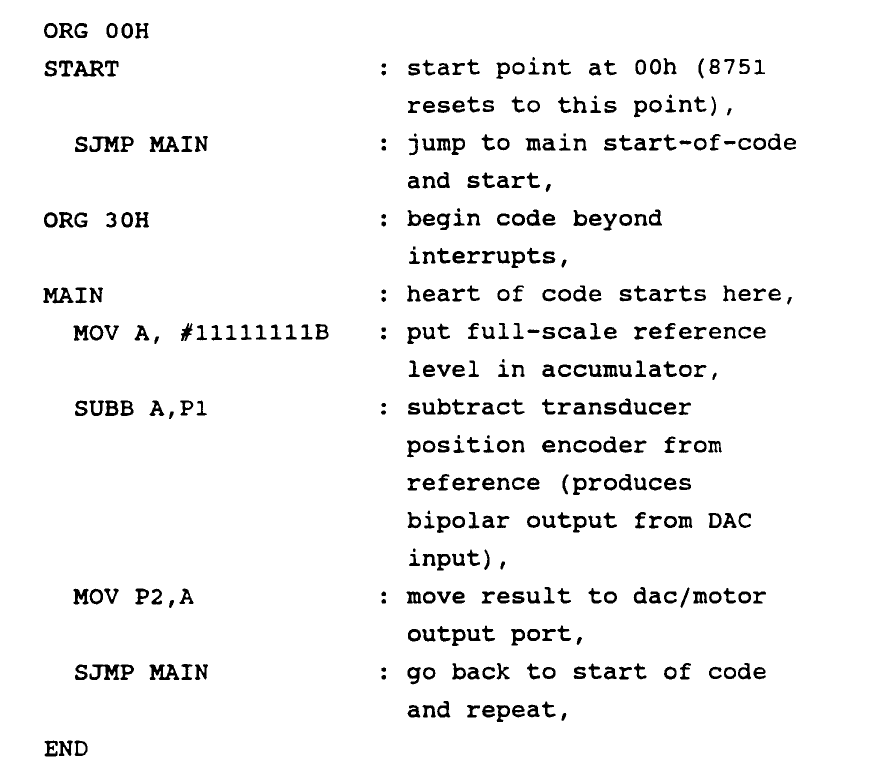

It is to be understood that the circuit components illustrated in FIGS. 5 and 6 are merely representative of alternate embodiments of the present invention. Particularly with respect to the embodiments of FIGS. 5 and 6, various types and values of circuit components may be utilized. In accordance with such embodiments the following sets forth specific types and values of the circuit components.

| Reference Designation | Description |
|---|---|
| DC Gear Motor 30 | Globe #C43A113-1 |
| Potentiometers 42 & 46 | Ohmite, 1K |
| Operational Amp. 45 & 65 | Texas Inst., TL084 |
| Transistors 51 & 70 | Motorola, 2N5192 |
| Transistors 52 & 71 | Motorola, 2N5195 |
| Digital-to-Analog Conv.64 | Datel, UP8PC |
| Microcontroller 62 | Intel, 8751 |
| Optical Shaft Enc. 61 | B.E.I., #5V70 |
| Resistors 43 & 47 | Dale, RN55/60C (10K) |
| Resistors 44, 48, 66 & 67 | Dale, RN55/60C (100K) |
| Resistors 68 & 69 | Dale, RN55/60C (200K) |
| Oscillator 59 | 12 MHZ |

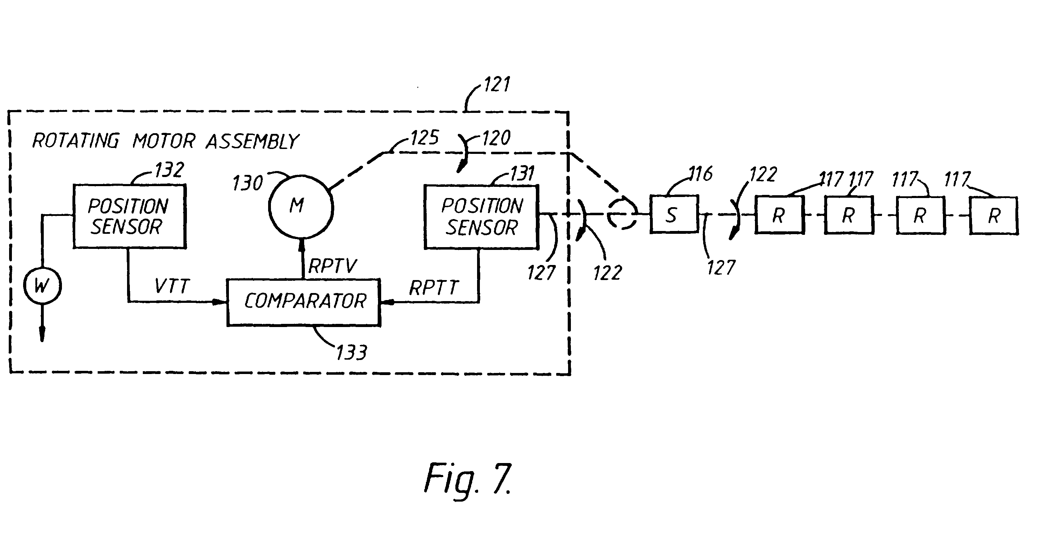

Another embodiment of the rotating motor assembly 21 will now be described in detail in conjunction with FIGS. 7-9.

Referring to FIG.7, a motor 130 is rotatably coupled, as shown by dashed line 125 and arrow 120, to acoustic energy source 116 and to acoustic energy receivers 117. Sensor 131 rotates along with source 116 and receivers 117, as shown by dashed lines 127 and arrows 22, and outputs a source and receiver rotational position-to-tool housing signal RPTT. A sensor 132 outputs a vertical-to-tool housing signal VTT that represents the rotational position of the borehole tool within the deviated borehole relative to a vertical position. Comparator 133 determines the difference between these two signals VTT and RPTT and rotates motor 130 so as to minimize such difference and thereby maintain the focus of the source and receivers in a horizontal direction which, in the case of a deviated borehole with the logging tool lying in juxtaposition with the lower side of the borehole from the force of gravity, is in a direction perpendicular to the axis of the borehole tool and to the direction of eccentricity of the logging tool within the borehole.

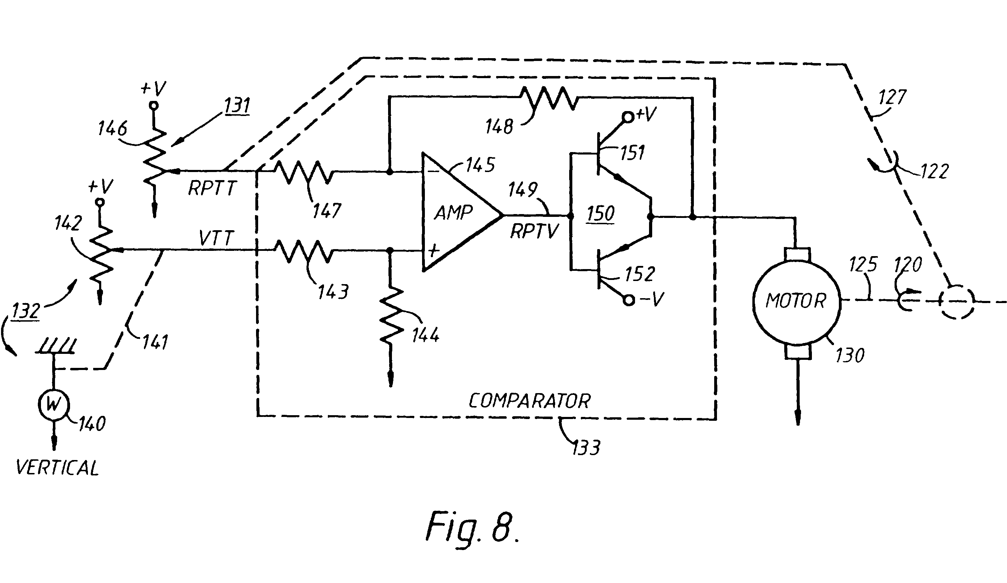

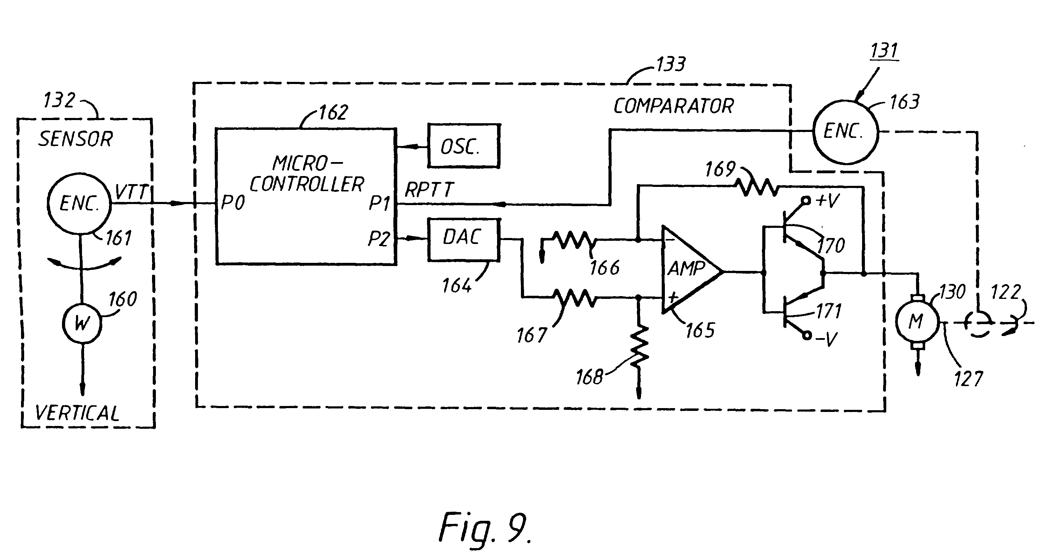

The rotating motor assembly 21 of FIG.7 may operate in accordance with the present invention in either an analog mode as shown in FIG.8 or in a digital mode as shown in FIG.9.

Referring firstly to FIG.8, there is illustrated an analog servomechanism mode of operation. Sensor 132 comprises a gimbal mounted weight 140 which mechanically moves by way of coupling 141 the rotor of a potentiometer 142. This serves to provide a signal VTT which is a vertical reference relative to the stator of the potentiometer 142 which is affixed to the logging tool housing. A voltage proportional to the angular position of the potentiometer 142 is input to comparator 133 through resistor networks 143 and 144 to the non-inverting input of difference amplifier 145. Similarly, sensor 131 comprises a potentiometer 146 which is mechanically coupled to, and rotates with, the motor 130, the source 16 and receivers 17 (as shown by dashed line 127 and arrow 122). The stator of potentiometer 146 is also affixed to the logging tool housing. A signal RPTT having a voltage proportional to the angular position of potentiometer 146 is input to comparator 133 through resistor network 147 and 148 to the inverting input of difference amplifier 145. Amplifier 145 determines the difference of the two potentiometer outputs to produce an analog signal on line 149 which represents the difference of the vertical reference-to-tool housing signal VTT minus the receiver position-to-tool housing signal RPTT. This analog difference signal removes the tool housing position so that a receiver position-to-vertical reference signal RPTV applies to amplifier 150 which drives motor 130 through current amplifying transistors 151 and 152 in a direction to minimize the difference between the signals VTT and RPTT. Any difference detected by amplifier 145 is amplified to improve the response speed of the operation.

Referring now to FIG.9, there is illustrated a digital servomechanism mode of operation. Sensor 132 comprises a gimbal mounted weight 160 which mechanically moves the digital shaft encoder 161, which is affixed to the logging tool housing to output a vertical reference-to-tool housing signal VTT which is an absolute 8-bit binary word depending on the angular shaft position of the encoder. This signal VTT is input to the PO port of an 8-bit microcontroller 162. Input to the P1 port is a receiver position-to-tool housing signal RPTT which is an 8-bit binary word from digital shaft encoder 163 of sensor 131. Digital shaft encoder 163 is mechanically coupled to and rotates with the motor 130, the source 16 and receivers 17 (as shown by dashed line 127 and arrow 122). Microcontroller 162 determines the difference RPTV between signal VTT and signal RPTT in accordance with the following assembly source code designed for an Intel 8751/87C51 microcontroller with on-board eprom:

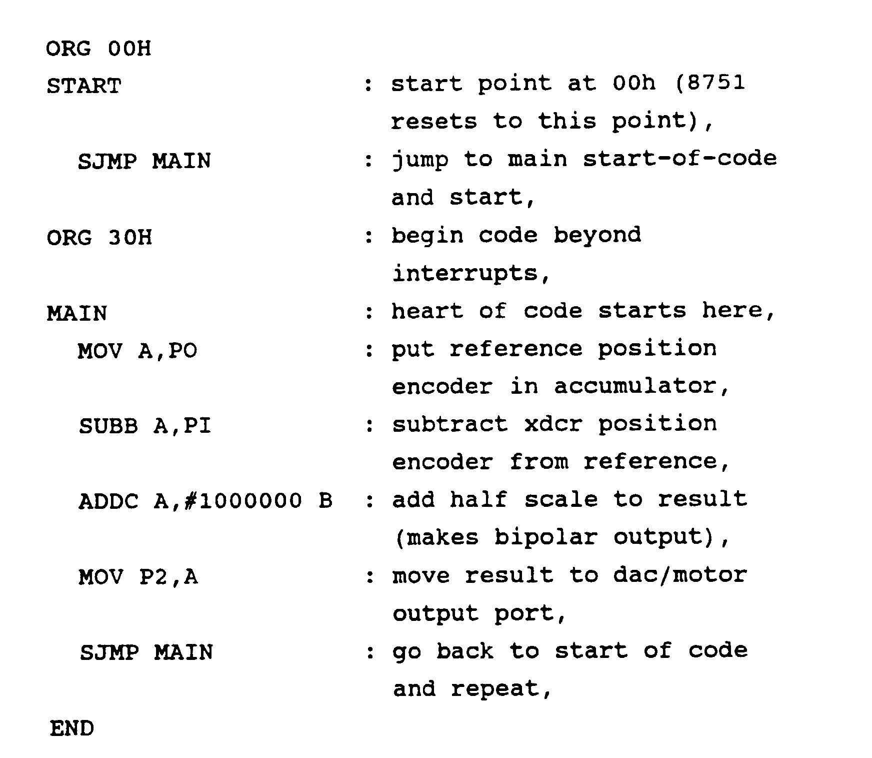

An 8-bit digital-to-analog convertor 164 converts the 8-bit word from controller 162 to an analog voltage that is amplified by operational amplifier 165 and associated resistors 166-169 and transistors 170-171 and is thereafter applied to motor 130.

It is to be understood that the circuit components illustrated in FIGS.8 and 9 are merely representative of alternate embodiments of the present invention. Particularly with respect to the embodiments of FIGS.8 and 9, various types and values of circuit components may be utilized. In accordance with such embodiments the following sets forth specific types and values of the circuit components.

| Reference Designation | Description |
|---|---|
| DC Gear Motor 130 | Globe #C43A113-1 |
| Potentiometers 142 & 146 | Ohmite, 1K |
| Operational Amp. 145 & 165 | Texas Inst., TL084 |
| Transistors 151 & 170 | Motorola, 2N5192 |
| Transistors 152 & 171 | Motorola, 2N5195 |
| Digital-to-Analog Conv.164 | Datel, UP8PC |
| Microcontroller 162 | Intel, 8751 |
| Optical Shaft Enc. 161 & 163 | B.E.I., #5V70 |
| Resistors 143 & 147 | Dale, RN55/60C (10K) |
| Resistors 144, 148, 166 & 167 | Dale, RN55/60C (100K) |
| Resistors 168 & 169 | Dale, RN55/60C (200K) |
| Oscillator 159 | 12 MHZ |

Having now described a preferred embodiment of the present invention, it will be apparent to those skilled in the art of acoustic well logging that various changes and modifications may be made within the scope of the invention as set forth in the appended claims.

## Claims

1. A method for acoustic shear wave logging of a subsurface formation penetrated by a deviated borehole, comprising the steps of:
a) traversing the borehole with logging tool containing a dipole acoustic energy source and at least one axially spaced-apart dipole acoustic energy receiver, said dipole source and dipole receiver being positioned eccentrically with respect to the axis of said borehole,
b) rotating said dipole source about the axis of the borehole tool to focus the directivity of acoustic energy such that it is perpendicular to the axis of the borehole tool and is within substantially 20° of the perpendicular to the direction of eccentricity of said source with respect to the borehole axis,
c) exciting said dipole source to generate asymmetric acoustic energy pressure waves within the borehole fluid which are converted upon impact with the cased borehole into (i) shear waves which travel through the surrounding unconsolidated formations, and (ii) tube waves which travel through the casing to said spaced-apart receivers,
d) rotating said dipole receiver to focus the reception of acoustic energy in the same direction as the focusing of said source, and
e) recording the amplitudes of said shear waves and said tube waves within said acoustic energy received by said dipole receiver such that the amplitudes of said tube waves are minimized with respect to the amplitudes of said shear waves.

2. A method according to claim 1, wherein the degree of eccentricity of said source and said receiver is such as to position said logging tool in juxtaposition with the cased borehole wall.

3. A method according to claim 2, wherein the positioning of said logging tool in juxtaposition with the cased borehole wall is affected by the force of gravity acting along the length of said deviated borehole.

4. A method according to claim 1, wherein eccentricity of said source and said receiver with respect to the borehole axis is within a horizontal borehole.

5. A borehole logging tool for acoustic shear wave logging of a subsurface formation penetrated by a deviated borehole, comprising:
a) a dipole acoustic energy source mounted for rotation about the axis of the borehole tool to focus the directivity of acoustic energy such that it is perpendicular to the axis of the borehole tool,
b) at least one axially spaced-apart dipole acoustic energy receiver mounted for rotation about the axis of the borehole tool to focus the reception of acoustic energy in the same direction as the focusing of said source,
c) a motor mechanically coupled to said source and said receiver for rotating said source and said receiver about the axis of the borehole tool,
d) control means for rotating said source and said receiver to maintain the focus of said source and said receiver in a horizontal direction that is perpendicular to the direction of eccentricity of the borehole tool with respect to the borehole.

6. A tool according to claim 5, wherein the control means comprises: means for providing a first signal representing the source and receiver rotational positions relative to a vertical direction; means for providing a second signal having a fixed reference level representing said vertical direction; a comparator for providing a third signal of the difference between said first and second signals representing the difference between said first and seccnd signals; and means for applying said third signal to said motor to cause it to rotate said source and said receiver to a position that minimizes said third signal so as to maintain the focus of said source and said receiver in a horizontal direction that is perpendicular to the direction of eccentricity of the borehole tool with respect to the borehole.

7. A tool according to claim 6, wherein: said means for providing said first signal comprises a first potentiometer having a stator and a rotor, said stator being coupled to a gimbal mounted weight so that it moves in response to the vertical pull of gravity on said weight, and said rotor being rotationally coupled with said source and receiver, whereby said potentiometer provides a voltage output representing the rotational position of said source and said receiver relative to a vertical direction; and said means for providing said second signal comprises a second potentiometer coupled to a fixed voltage source.

8. A tool according to claim 7, wherein said comparator is an operational amplifier that subtracts said first signal represented by voltage output of said first potentiometer from said second signal represented by a fixed voltage output of said second potentiometer to provide said third signal.

9. A tool according to claim 8 wherein, said means for applying said third signal to said motor comprises a current amplifying means for rotating said motor in a direction to minimize the difference between said first and second signals.

10. A tool according to claim 6, wherein said means for providing said first signal comprises a digital shaft encoder fixed to a gimbal mounted weight so that it moves in response to the vertical pull of gravity on said weight and rotatably coupled to said source and said receiver, the rotational position of said digital shaft encoder providing an output representing the rotational position of said source and said receiver relative to a vertical direction. Said means for providing said second signal provides a fixed digital reference number.

11. A tool according to claim 10, wherein said comparator is a microcontroller programmed to subtract said first signal represented by the output of said digital shaft encoder from said second signal represented by said fixed digital reference number to provide said third signal.

12. A tool according to claim 11, wherein said means for applying said third signal to said motor comprises: a digital-to-analog convertor; and a current amplifying means for rotating said motor in a direction to minimize the difference between said first and second signals.

13. A tool according to claim 5, wherein the control means comprises: means for providing a first signal representing the source and receiver rotational positions relative to the rotational position of the borehole tool within the deviated borehole; means for providing a second signal representing the rotational position of the borehole tool within the deviated borehole relative to a vertical direction; a comparator for providing a third signal of the difference between said first and second signals representing the rotational position of said source and said receiver relative to a vertical direction; and means for applying said third signal to said motor to cause it to rotate said source and said receiver to a position that minimizes said third signal so as to maintain the focus of said source and said receiver in a horizontal direction that is perpendicular to the direction of eccentricity of the borehole tool with respect to the borehole axis.

14. A tool according to claim 13, wherein: said means for producing said first signal comprises a first potentiometer having a stator and a rotor, said stator being affixed to the housing of the borehole tool, and said rotor being rotationally coupled with said source and said receiver, the rotational position of said rotor providing for a voltage output from said first potentiometer representing the relative rotational position of said source and said receiver to said borehole tool; and said means for producing said second signal comprises: (i) a second potentiometer having a stator, and a movable rotor, said stator being affixed to the housing of the borehole tool, and (ii) a gimbal mounted weight mechanically coupled to said second potentiometer to move said rotor in response to the vertical pull of gravity on said weight, the rotational position of said rotor providing for a voltage output from said potentiometer representing the rotational position of said borehole tool relative to a vertical direction.

15. A tool according to claim 14, wherein said comparator is an operational amplifier that subtracts said first signal represented by voltage output of said first potentiometer from said second signal represented by the voltage output of said second potentiometer to provide said third signal representing the rotational position of said source and said receiver relative to a vertical direction.

16. A tool according to claim 15, wherein said means for applying said third signal to said motor comprises a current amplifying means for rotating said motor in a direction to minimize the difference between said first and second signals.

17. A tool according to claim 13, wherein: said means for providing said first signal comprises a first digital shaft encoder fixed to the housing of said borehole tool and to said source and receiver, the rotational position of said digital shaft encoder providing an output representing the rotational position of said source and said receiver relative to said borehole tool; said means for producing said second signal comprises: (i) a second digital shaft encoder fixed to the housing of said borehole tool; and (ii) a gimbal mounted weight mechanically coupled to said second digital shaft encoder to cause said second digital shaft encoder to provide an output representing the rotational position of said borehole tool relative to a vertical direction.

18. A tool according to claim 17, wherein said comparator is a microcontroller programmed to subtract said first signal represented by the output of said first digital shaft encoder from said second signal represented by the output of said second digital shaft encoder to produce said third signal representing the rotational position of said source and receiver relative to a vertical direction.

19. A tool according to claim 18, wherein said means for applying said third signal to said motor comprises: a digital-to-analog convertor; and a current amplifying means for rotating said motor in a direction to minimize the difference between said first and second signals.

## Patentansprüche

1. Verfahren zum Protokollieren akustischer Scherwellen einer unterirdischen Formation, die von einem abgewichenen Bohrloch durchdrungen ist, mit folgenden Schritten:
a) Das Bohrloch wird mit einem Protokollwerkzeug durchquert, das eine akustische Dipolenergiequelle und mindestens einen axial beabstandeten akustischen Dipolenergieempfänger enthält, wobei die Dipolquelle und der Dipolempfänger bezüglich der Achse des Bohrlochs exzentrisch angeordnet sind,
b) die Dipolquelle wird um die Achse des Bohrlochwerkzeugs gedreht, um die Richtwirkung der akustischen Energie so zu fokussieren, daß sie senkrecht zu der Achse des Bohrlochwerkzeugs und innerhalb im wesentlichen 20° von der Senkrechten zu der Richtung der Exzentrizität der Quelle bezüglich der Bohrlochachse ist,
c) die Dipolquelle wird angeregt, um asymmetrische akustische Energiedruckwellen innerhalb der Bohrlochflüssigkeit zu erzeugen, die beim Auftreffen auf das ummantelte Bohrloch in (i) Scherwellen, welche sich durch die umgebende unverdichtete Formation bewegen, und (ii) in Rohrwellen umgesetzt werden, welche sich durch die Ummantelung zu den beabstandeten Empfängern bewegen,
d) der Dipolempfänger wird gedreht, um den Empfang der akustischen Energie in die gleiche Richtung wie die Fokussierung der Quelle zu fokussieren, und
e) die Amplituden der Scherwellen und der Rohrwellen innerhalb der akustischen Energie werden aufgezeichnet, welche von dem Dipolempfänger empfangen wird, so daß die Amplituden der Rohrwellen bezüglich der Amplituden der Scherwellen minimiert sind.

2. Verfahren nach Anspruch 1, worin der Grad der Exzentrizität der Quelle und des Empfängers so gewählt wird, daß das Protokollwerkzeug direkt neben der Wand des ummantelten Bohrlochs angeordnet wird.

3. Verfahren nach Anspruch 2, worin die Anordnung des Protokollwerkzeugs direkt neben der Wand des ummantelten Bohrlochs durch die Schwerkraft beeinflußt wird, welche entlang der Länge des abgewichenen Bohrlochs wirkt.

4. Verfahren nach Anspruch 1, worin die Exzentrizität der Quelle und des Empfängers bezüglich der Bohrlochachse innerhalb eines horizontalen Bohrlochs ist.

5. Bohrlochprotokollwerkzeug zum Protokollieren akustischer Scherwellen einer unterirdischen Formation, die von einem abgewichenen Bohrloch durchdrungen ist, mit
a) einer akustischen Dipolenergiequelle, die um die Achse des Bohrlochwerkzeugs drehbar angebracht ist, um die Richtwirkung der akustischen Energie zu fokussieren, so daß sie senkrecht zu der Achse des Bohrlochwerkzeugs ist,
b) mindestens einem axial beabstandeten akustischen Dipolenergieempfänger, der um die Achse des Bohrlochwerkzeugs drehbar angebracht ist, um den Empfang der akustischen Energie in die gleiche Richtung wie die Fokussierung der Quelle zu fokussieren,
c) einem Motor, der mechanisch an die Quelle und den Empfänger gekoppelt ist, um die Quelle und den Empfänger um die Achse des Bohrlochwerkzeugs zu drehen,
d) Steuermittel zum Drehen der Quelle und des Empfängers, um den Fokus der Quelle und des Empfängers in einer horizontalen Richtung zu halten, die senkrecht zu der Richtung der Exzentrizität des Bohrlochwerkzeugs bezüglich des Bohrlochs ist.

6. Werkzeug nach Anspruch 5, worin das Steuermittel folgendes umfaßt: Mittel zur Bereitstellung eines ersten Signals, das die Drehstellungen der Quelle und des Empfängers relativ zu einer vertikalen Richtung repräsentiert; Mittel zur Bereitstellung eines zweiten Signals, das einen festen Bezugslevel aufweist, der die vertikale Richtung repräsentiert; einen Komparator zur Bereitstellung eines dritten Signals der Differenz zwischen dem ersten und dem zweiten Signal, das die Differenz zwischen dem ersten und dem zweiten Signal repräsentiert; Mittel zum Anlegen des dritten Signals an den Motor, um ihn zu veranlassen, die Quelle und den Empfänger in eine Stellung zu drehen, die das dritte Signal minimiert, um den Fokus der Quelle und des Empfängers in einer horizontalen Richtung zu halten, die senkrecht zu der Richtung der Exzentrizität des Bohrlochwerkzeugs bezüglich dem Bohrloch ist.

7. Werkzeug nach Anspruch 6, worin das Mittel zur Bereitstellung des ersten Signals ein erstes Potentiometer mit einem Stator und einem Rotor umfaßt, wobei der Stator mit einem kardanisch aufgehängten Gewicht gekoppelt ist, so daß er sich als Reaktion auf den vertikalen Zug der Schwerkraft an dem Gewicht bewegt, und der Rotor drehbar mit der Quelle und dem Empfänger gekoppelt ist, wobei das Potentiometer eine Spannungsausgabe bereitstellt, die die Drehstellung der Quelle und des Empfängers relativ zu einer vertikalen Richtung repräsentiert, und wobei das Mittel zur Bereitstellung des zweiten Signals ein zweites Potentiometer umfaßt, das mit einer Festspannungsquelle gekoppelt ist.

8. Werkzeug nach Anspruch 7, worin der Komparator ein Rechenverstärker ist, der das erste Signal, das durch die Spannungsausgabe des ersten Potentiometers repräsentiert wird, von dem zweiten Signal, das durch eine Ausgabe einer Festspannung des zweiten Potentiometers repräsentiert wird, subtrahiert, um das dritte Signal bereitzustellen.

9. Werkzeug nach Anspruch 8, worin das Mittel zum Anlegen des dritten Signals an den Motor einen Stromverstärker umfaßt, um den Motor in eine Richtung zu drehen, in der die Differenz zwischen dem ersten und dem zweiten Signal minimiert ist.

10. Werkzeug nach Anspruch 6, worin das Mittel zur Bereitstellung des ersten Signals eine digitale Kodierwelle umfaßt, die an einem kardanisch aufgehängten Gewicht befestigt ist, so daß sie sich als Reaktion auf den vertikalen Zug der Schwerkraft an dem Gewicht bewegt, und die drehbar mit der Quelle und dem Empfänger gekoppelt ist, wobei die Drehstellung der digitalen Kodierwelle eine Ausgabe bereitstellt, die die Drehstellung der Quelle und des Empfängers relativ zu einer vertikalen Richtung repräsentiert, und worin das Mittel zur Bereitstellung des zweiten Signals eine feste digitale Bezugszahl bereitstellt.

11. Werkzeug nach Anspruch 10, worin der Komparator ein Mikrocontroller ist, der programmiert ist, das erste, durch die Ausgabe der digitalen Kodierwelle repräsentierte Signal von dem zweiten, durch die feste digitale Bezugszahl repräsentierten Signal zu subtrahieren, um das dritte Signal bereitzustellen.

12. Werkzeug nach Anspruch 11, worin das Mittel zum Anlegen des dritten Signals an den Motor einen Digital-Analog-Wandler und einen Stromverstärker umfaßt, um den Motor in eine Richtung zu drehen, in der die Differenz zwischen dem ersten und dem zweiten Signal minimiert ist.

13. Werkzeug nach Anspruch 5, worin das Steuermittel folgendes umfaßt: Mittel zur Bereitstellung eines ersten Signals, das die Drehstellung der Quelle und des Empfängers relativ zu der Drehstellung des Bohrlochwerkzeugs innerhalb des abgewichenen Bohrlochs repräsentiert; Mittel zur Bereitstellung eines zweiten Signals, das die Drehstellung des Bohrlochwerkzeugs innerhalb des abgewichenen Bohrlochs relativ zu einer vertikalen Richtung repräsentiert; einen Komparator zur Bereitstellung eines dritten Signals der Differenz zwischen dem ersten und dem zweiten Signal, das die Drehstellung der Quelle und des Empfängers relativ zu einer vertikalen Richtung repräsentiert; Mittel zum Anlegen des dritten Signals an den Motor, um ihn zu veranlassen, die Quelle und den Empfänger in eine Stellung zu drehen, die das dritte Signal minimiert, um den Fokus der Quelle und des Empfängers in einer horizontalen Richtung zu halten, die senkrecht zu der Richtung der Exzentrizität des Bohrlochwerkzeugs bezüglich der Bohrlochachse ist.

14. Werkzeug nach Anspruch 13, worin das Mittel zur Erzeugung des ersten Signals ein erstes Potentiometer mit einem Stator und einem Rotor umfaßt, wobei der Stator an dem Gehäuse des Bohrlochwerkzeugs befestigt ist und der Rotor mit der Quelle und dem Empfänger drehbar gekoppelt ist, und die Drehstellung des Rotors eine Spannungsausgabe von dem ersten Potentiometer bereitstellt, die die relative Drehstellung der Quelle und des Empfängers zu dem Bohrlochwerkzeug repräsentiert, und worin das Mittel zur Erzeugung des zweiten Signals (i) ein zweites Potentiometer mit einem Stator und einem beweglichen Rotor umfaßt, wobei der Stator an dem Gehäuse des Bohrlochwerkzeugs befestigt ist, und (ii) ein kardanisch aufgehängtes Gewicht umfaßt, welches mechanisch mit dem zweiten Potentiometer gekoppelt ist, um den Rotor als Reaktion auf den vertikalen Zug der Schwerkraft an dem Gewicht zu bewegen, wobei die Drehstellung des Rotors eine Spannungsausgabe von dem Potentiometer bereitstellt, die die Drehstellung des Bohrlochwerkzeugs relativ zu einer vertikalen Richtung repräsentiert.

15. Werkzeug nach Anspruch 14, worin der Komparator ein Rechenverstärker ist, der das erste Signal, das durch die Spannungsausgabe des ersten Potentiometers repräsentiert wird, von dem zweiten Signal, das durch die Spannungsausgabe des zweiten Potentiometers repräsentiert wird, subtrahiert, um das dritte Signal bereitzustellen, das die Drehstellung der Quelle und des Empfängers relativ zu einer vertikalen Richtung repräsentiert.

16. Werkzeug nach Anspruch 15, worin das Mittel zum Anlegen des dritten Signals an den Motor einen Stromverstärker umfaßt, um den Motor in eine Richtung zu drehen, in der die Differenz zwischen dem ersten und dem zweiten Signal minimiert ist.

17. Werkzeug nach Anspruch 13, worin das Mittel zur Bereitstellung des ersten Signals eine erste digitale Kodierwelle umfaßt, die an dem Gehäuse des Bohrlochwerkzeugs sowie an der Quelle und dem Empfänger befestigt ist, wobei die Drehstellung der digitalen Kodierwelle eine Ausgabe bereitstellt, die die Drehstellung der Quelle und des Empfängers relativ zu dem Bohrlochwerkzeug repräsentiert, und worin das Mittel zur Erzeugung des zweiten Signals (i) eine zweite digitale Kodierwelle, welche an dem Gehäuse des Bohrlochwerkzeugs befestigt ist, und (ii) ein kardanisch aufgehängtes Gewicht umfaßt, das mechanisch mit der zweiten digitalen Kodierwelle gekoppelt ist, um die zweite digitale Kodierwelle zu veranlassen, eine Ausgabe bereitzustellen, die die Drehstellung des Bohrlochwerkzeugs relativ zu einer vertikalen Richtung repräsentiert.

18. Werkzeug nach Anspruch 17, worin der Komparator ein Mikrocontroller ist, der programmiert ist, das erste, durch die Ausgabe der ersten digitalen Kodierwelle repräsentierte Signal von dem zweiten, durch die Ausgabe der zweiten digitalen Kodierwelle repräsentierten Signal zu subtrahieren, um das dritte Signal zu erzeugen, das die Drehstellung der Quelle und des Empfängers relativ zu einer vertikalen Richtung repräsentiert.

19. Werkzeug nach Anspruch 18, worin das Mittel zum Anlegen des dritten Signals an den Motor einen Digital-Analog-Wandler und einen Stromverstärker umfaßt, um den Motor in eine Richtung zu drehen, in der die Differenz zwischen dem ersten und dem zweiten Signal minimiert ist.

## Revendications

1. Un procédé de diagraphie acoustique par ondes de cisaillement d'une formation souterraine pénétrée par un trou de forage incliné, comprenant les étapes consistant :
a) à faire passer à travers le trou de forage un outil de diagraphie contenant une source d'énergie acoustique dipolaire et au moins un récepteur d'énergie acoustique dipolaire écartés l'un de l'autre dans le sens axial, ladite source dipolaire et ledit récepteur dipolaire étant positionné excentriquement par rapport à l'axe dudit trou de forage ;
b) à obliger ladite source dipolaire à subir une rotation autour de l'axe de l'outil de trou de forage afin de focaliser la directivité de l'énergie acoustique de sorte qu'elle soit perpendiculaire à l'axe de l'outil de trou de forage en étant comprise dans une limite de sensiblement 20 degrés de la perpendiculaire à la direction d'excentricité de ladite source par rapport à l'axe du trou de forage ;
c) à exciter ladite source dipolaire afin de générer des ondes de pression d'énergie acoustique asymétriques à l'intérieur du fluide de trou de forage, les ondes étant converties suite à leur impact avec le trou de forage tubé en :
(i) des ondes de cisaillement qui traversent les formations non consolidées environnantes, et
(ii) des ondes de tube qui traversent le tubage vers lesdits récepteurs à distance,
d) à faire tourner ledit récepteur dipolaire afin de focaliser la réception de l'énergie acoustique selon la même direction que la focalisation de ladite source ; et
e) à enregistrer l'amplitude desdites ondes de cisaillement et desdites ondes de tube à l'intérieur de ladite énergie acoustique reçue par ledit récepteur dipolaire afin de minimaliser les amplitudes desdites ondes de tube par rapport aux amplitudes desdites ondes de cisaillement.

2. Un procédé selon la revendication 1, dans lequel le degré d'excentricité de ladite source et dudit récepteur est tel que ledit outil de diagraphie soit positionné en juxtaposition avec la paroi tubée du trou de forage.

3. Un procédé selon la revendication 2, dans lequel le positionnement dudit outil de diagraphie en juxtaposition avec la paroi tubée du trou de forage est influencé par la force de la gravité qui agit le long de la longueur dudit trou de forage incliné.

4. Un procédé selon la revendication 1, dans lequel l'excentricité de ladite source et dudit récepteur par rapport à l'axe du trou de forage est à l'intérieur d'un trou de forage horizontal.

5. Un outil de diagraphie d'un trou de forage, pour la diagraphie par onde de cisaillement acoustique d'une formation souterraine pénétrée par un trou de forage incliné, comprenant :
a) une source d'énergie acoustique dipolaire montée à rotation autour de l'axe d'outil de trou de forage pour focaliser la directivité de l'énergie acoustique afin qu'elle soit perpendiculaire à l'axe de l'outil de trou de forage ;
b) au moins un récepteur d'énergie acoustique dipolaire à distance axialement, monté à rotation autour de l'axe de l'outil de trou de forage pour focaliser la réception de l'énergie acoustique selon la même direction que la focalisation de ladite source ;
c) un moteur couplé mécaniquement à ladite source et audit récepteur pour faire tourner ladite source et ledit récepteur autour de l'axe de l'outil de trou de forage ;
d) des moyens de commande pour faire tourner ladite source et ledit récepteur afin de maintenir la focalisation de ladite source et dudit récepteur selon une direction horizontale qui est perpendiculaire à la direction d'excentricité de l'outil de trou de forage par rapport au toru de forage.

6. Un outil selon la revendication 5, dans lequel les moyens de commande comprennent :
- des moyens pour fournir un premier signal qui représente les positions rotationnelles de la source et du récepteur par rapport à une direction verticale :
- des moyens pour fournir un deuxième signal présentant un niveau de référence fixe et qui représente ladite direction verticale ;
- un comparateur pour fournir un troisième signal pour la différence entre ledit premier et ledit deuxième signal, représentant la différence entre ledit premier et ledit deuxième signal ; et
- des moyens pour appliquer ledit troisième signal audit moteur de sorte que ce dernier met en rotation ladite source et ledit récepteur à une position où ledit troisième signal soit minimalisé afin de maintenir le foyer de ladite source et dudit récepteur selon une direction horizontale qui est perpendiculaire à la direction d'excentricité de l'outil de forage par rapport au trou de forage.

7. Un outil selon la revendication 6, dans lequel lesdits moyens fournissant ledit premier signal comprennent un premier potentiomètre ayant un stator et un rotor, ledit stator étant couplé à une masse montée au moyen d'un joint universel de façon à se déplacer en réponse à l'action verticale de la force de la gravité sur ladite masse, ledit rotor étant couplé à rotation avec ladite source et ledit récepteur, ledit potentiomètre fournissant une tension de sortie qui représente la position rotationelle de ladite source et dudit récepteur relative à une position verticale ; et lesdits moyens fournissant ledit deuxième signal comprenant un deuxième potentiomètre couplé à une source de tension fixe.

8. Un outil selon la revendication 7, dans lequel ledit comparateur est un amplificateur opérationnel qui retranche ledit premier signal représenté par la tension de sortie dudit premier potentiomètre dudit deuxième signal représenté par une sortie de tension fixe dudit deuxième potentiomètre, afin de fournir ledit troisième signal.

9. Un outil selon la revendication 8, dans lequel lesdits moyens pour fournir ledit troisième signal audit moteur comprennent des moyens d'amplification de courant pour faire tourner ledit moteur selon une direction permettant de minimaliser la différence entre lesdits premier et deuxième signaux.

10. Un outil selon la revendication 6, dans lequel lesdits moyens permettant de fournir ledit premier signal comprennent un code numérique de position angulaire fixé à une masse montée sur un joint universel lui permettant de se déplacer en réponse à l'action verticale de la force de gravité agissant sur ladite masse, et en étant couplé de façon rotative à ladite source et audit récepteur, la position rotationelle dudit codeur numérique de position angulaire fournissant une sortie qui représente la position rotationelle de ladite source et dudit récepteur relative à une direction verticale, lesdits moyens fournissant ledit deuxième signal fournissant un numéro de référence numérique fixe.

11. Un outil selon la revendication 10, dans lequel ledit comparateur est un micro-contrôleur programmé pour retrancher ledit premier signal représenté par la sortie dudit codeur numérique de position angulaire dudit deuxième signal représenté par ledit numéro de référence numérique fixe, afin de fournir ledit troisième signal.

12. Un outil selon la revendication 12, dans lequel lesdits moyens pour appliquer ledit troisième signal au dit moteur comprennent : un convertisseur numérique/analogique ; et des moyens d'ampliflcation de courant pour faire tourner ledit moteur selon une direction permettant de minimaliser la différence entre lesdits premier et deuxième signaux.

13. Un outil selon la revendication 5, dans lequel les moyens de commande comprennent : des moyens fournissant un premier signal qui représente les positions rotationelles de la source et du récepteur relatives à la position rotationelle de l'outil de trou de forage à l'intérieur du trou de forage incliné; des moyens pour fournir un deuxième signal qui représente la position rotationelle de l'outil de trou de forage à l'intérieur du trou de forage incliné relationnelle à une position verticale ; un comparateur fournissant un troisième signal correspondant à la différence entre lesdits premier et deuxième signaux représentant les positions rotationelles de ladite source et dudit récepteur relative à une direction verticale ; et des moyens pour appliquer ledit troisième signal audit moteur afin que ce dernier provoque la rotation de ladite source et dudit récepteur vers une position minimalisant ledit troisième signal afin de maintenir le foyer de ladite source et dudit récepteur selon une direction horizontale qui est perpendiculaire à la direction d'excentricité de l'outil de trou de forage par rapport à l'axe du trou de forage.

14. Un outil selon la revendication 13, dans lequel lesdits moyens fournissant ledit premier signal comprennent un premier potentiomètre ayant un stator et un rotor, ledit stator étant fixé au boîtier de l'outil de trou de forage, et le moteur étant couplé de façon rotative à ladite source et audit récepteur, la position rotationelle dudit rotor déterminant une tension de sortie dudit premier potentiomètre représentative de la position rotationelle relative de ladite source et dudit récepteur par rapport audit outil de trou de forage; et lesdits moyens fournissant ledit deuxième signal comprenant :
(i) un deuxième potentiomètre ayant un stator et un rotor mobile, ledit stator étant fixé au boîtier de l'outil de trou de forage, et
(ii) une masse montée sur un joint universel couplé mécaniquement audit deuxième potentiomètre pour déplacer ledit rotor en réponse à l'action verticale de la force de gravité agissant sur ladite masse, la position rotationelle dudit rotor déterminant une tension de sortie dudit potentiomètre représentative de la position rotationelle dudit outil de trou de forage par rapport à une direction verticale.

15. Un outil selon la revendication 14, dans lequel ledit comparateur est un amplificateur opérationnel qui retranche ledit premier signal, représenté par une tension de sortie dudit premier potentiomètre, dudit deuxième signal. représenté par la tension de sortie dudit deuxième potentiomètre, afin de fournir ledit troisième signal qui représente la position rotationelle de ladite source et dudit récepteur par rapport à une direction verticale.

16. Un outil selon la revendication 15, dans lequel lesdits moyens pour appliquer ledit troisième signal audit moteur comprennent des moyens d'amplification de courant pour faire tourner ledit moteur selon une direction qui minimalise la différence entre lesdits premier et deuxième signaux.

17. Un outil selon la revendication 13, dans lequel lesdits moyens fournissant ledit premier signal comprennent un premier codeur numérique de position angulaire fixé au boîtier dudit outil de trou de forage et à ladite source et au récepteur, la position rotationelle dudit codeur numérique de position angulaire fournissant un signal de sortie qui représente la position rotationelle de ladite source et dudit récepteur par rapport audit outil de trou de forage ; et les moyens fournissant ledit deuxième signal comprenant :
(i) un deuxième codeur numérique de position angulaire fixé au boîtier dudit outil de forage ; et
(ii) une masse montée sur un joint universel couplé mécaniquement audit deuxième codeur numérique de position angulaire de sorte que ledit deuxième codeur numérique de position angulaire fournisse un signal de sortie qui représente la position rotationelle dudit outil de trou de forage relative à une direction verticale.

18. Un outil selon la revendication 17, dans lequel ledit comparateur est un micro-contrôleur programmé pour retrancher ledit premier signal représenté par le signal de sortie dudit premier codeur numérique de position angulaire dudit deuxième signal représenté par le signal de sortie dudit deuxième codeur numérique de position angulaire, afin de produire ledit troisième signal qui représente la position rotationelle de ladite source et dudit récepteur par rapport à la direction verticale.

19. Un outil selon la revendication 18, dans lequel lesdits moyens d'application dudit troisième signal audit moteur comprennent: un convertisseur numérique/analogique; et des moyens d'amplification de courant pour faire tourner ledit moteur selon une direction qui minimalise la différence entre lesdits premier et deuxième signaux.
